# FASCICULE DE BREVET EUROPEEN

(11) **EP 2 386 005 B1**
(45) Date de publication et mention de la délivrance du brevet: **01.05.2013**
(21) Numéro de dépôt: 10706279.6
(22) Date de dépôt: 04.01.2010
(51) Int. Cl.: E04B 1/94, F16L 59/02

(54) **DISPOSITIF COMPOSITE D'ISOLATION THERMIQUE, EN PARTICULIER PARE-FLAMME OU COUPE-FEU**
VERBUNDVORRICHTUNG ZUR WÄRMEISOLIERUNG, INSBESONDERE FÜR FEUERSCHUTZ ODER -FESTIGKEIT
COMPOSITE DEVICE FOR HEAT INSULATION, PARTICULARLY FOR FIREPROOFING OR FIRE RESISTANCE

(30) Priorité: 07.01.2009 FR 0950058
(43) Date de publication de la demande: 16.11.2011
(73) Titulaire: Transformation Matieres Plastiques TMP, 86170 Neuville de Poitou (FR); Pinson, Patrick, 86130 Saint Cyr (FR)
(72) Inventeur: PINSON, Patrick, F-86130 Saint Cyr (FR)
(74) Mandataire: Blot, Philippe Robert Emile
(86) Numéro de dépôt international: PCT/FR2010/050002
(87) Numéro de publication internationale: WO 2010/079292

(56) Documents cités:
- WO-A1-96/16804
- US-A- 5 709 925
- US-A1- 2007 116 991

## Description

L'invention concerne un dispositif d'isolation thermique, et plus particulièrement un dispositif pare-flamme, voire même coupe-feu. Un dispositif coupe-feu est un dispositif pare-flamme empêchant la propagation du feu, et doté d'une isolation thermique évitant que la face opposée à celle arrêtant la flamme n'atteigne une température susceptible d'auto-enflammer un corps situé à l'arrière de celle-ci.

Un exemple de dispositif d'isolation thermique est décrit dans US 2007/116991.

Un dispositif pare-flamme est couramment utilisé dans des parois intérieures d'avions, de bateaux, de trains, ou même d'habitation, ou intégré à des enveloppes d'habillage, et visant à protéger les hommes et le matériel en cas d'incendie.

L'invention sera plus particulièrement décrite par rapport au domaine de l'aéronautique, sans y être toutefois limitée, ce domaine étant le plus exigeant en matière de gain de masse.

Il est connu d'utiliser comme dispositif pare-flamme, une structure comprenant un matériau isolant à base de fibres minérales pris en sandwich entre deux feuilles d'acier inoxydable d'épaisseur très mince, de l'ordre du dixième de millimètre.

Cependant, un tel dispositif n'est pas rigide et ne peut en aucun cas être autoporteur, ou constituer un élément de construction multifonctionnel.

En outre, de part une masse surfacique qui ne peut être inférieure à 3kg/m², elle apparaît trop lourde dans certaines utilisations. En effet, on cherche de plus en plus à alléger en poids les véhicules de transport, afin notamment de participer à une baisse des besoins en carburant.

Enfin, dans certaines applications, en particulier l'aéronautique, des accidents ont établi que la résistance au feu des éléments d'isolation des parois d'avion devrait être encore significativement augmentée au regard de l'exigence croissante de sécurité. On cherche donc constamment à augmenter la résistance totale des dispositifs pare-flamme, à la pénétration d'une flamme en fournissant une limitation optimale de la température arrière du dispositif.

D'autre dispositifs constitués d'un simple stratifié de verre ou de carbone sont régulièrement utilisés, mais n'intègrent pas la notion de limitation de température arrière au sens des normes coupe-feu et risquent de ne plus être admis avec les évolutions probables des normes de sécurité.

Il existe aussi des stratifiés à matrice minérale, appelés géopolymères, mais ceux-ci sont plus lourds et cassants, et ne conviennent pas pour les applications dont l'objectif est de gagner en masse.

D'autres types de structures sont également connus, par exemple à base de mousse phénolique chargée en fibres de verre. Mais la quantité importante de composés organiques dans de telles structures leur confère une capacité à se transformer en braise ardente, même après la disparition de la flamme.

L'invention a donc pour but de proposer un dispositif d'isolation thermique, et en particulier un dispositif pare-flamme, qui, puisse assurer une tenue au feu bien supérieure à celle des dispositifs existants, et également pendant un laps de temps supérieur au temps imparti par les normes actuelles, fournisse un gain en masse sans toutefois diminuer pour certaines applications la rigidité du produit, et/ou dégrader ses propriétés mécaniques, tout en garantissant une innocuité par rapport aux gaz et fumées de combustion.

Selon l'invention, le dispositif d'isolation thermique comporte une structure feuilletée résistante au feu comprenant une âme de matériau fibreux isolant présentant deux faces opposées, et deux revêtements, solidaires respectivement de chacune des faces de l'âme, caractérisé en ce que l'âme de matériau isolant comprend des éléments traversants à base de fibres minérales, sillonnant l'épaisseur de l'âme et joignant les deux faces opposées de l'âme en des points d'extrémité, et en ce que les revêtements sont formés d'un tissu fibreux imprégné de liant organique, la liaison mécanique de l'âme,de matériau isolant avec chaque revêtement étant réalisée sur l'ensemble des faces de l'âme, par des points de soudure coïncidant avec les points d'extrémité des éléments traversants en fibres.

Ainsi, l'invention fournit un dispositif dont la configuration de l'âme et sa solidarisation avec les revêtements procurent une tenue mécanique à l'ensemble convenant parfaitement à la fabrication de pièces fonctionnelles à destination pare-flamme, voire même coupe-feu, l'âme gardant toutes ses propriétés de résistance au feu. L'épaisseur de l'âme sera choisie en fonction de l'application pare-flamme ou coupe-feu.

Les éléments traversants constituent une liaison mécanique de l'ensemble de la structure. En cas de feu en regard d'une face, le liant du revêtement se trouve détruit, libérant les points de soudure à l'interface de l'âme et du revêtement, au niveau des extrémités des éléments traversants en fibres, ce qui libère les contraintes au niveau de l'âme, celle-ci pouvant s'expanser à la manière d'un ressort sans brûler en raison de sa constitution minérale fibreuse.

Selon une caractéristique, l'âme et les revêtements de la structure résistante au feu, sont rendus solidaires par pressage à chaud.

Avantageusement, l'âme de matériau isolant comporte des fibres à base de silice, ou de verre, ou de céramique, ou d'une combinaison d'au moins deux de ces matériaux, les fibres étant dépourvues de liant. L'absence de liant présente l'intérêt d'empêcher toute combustion de l'âme.

Selon une caractéristique, les éléments traversants de l'âme sont agencés perpendiculairement ou de manière oblique par rapport aux faces de l'âme, et sont éventuellement sécants entre eux.

Selon une autre caractéristique, les éléments traversants sont formés de fils ou filaments discontinus ou continus à base de fibres, de préférence de fibres de verre, et rendus solidaires des faces opposées de l'âme par une technique de couture ou similaire, les faces opposées de l'âme pouvant respectivement comprendre un support de textile à base de fibres minérales, par exemple de verre ou de silice, et perforé par les éléments traversants. Les supports de textile facilitent la tenue des éléments traversants et participent à une meilleure cohésion de l'âme avec les revêtements.

Avantageusement, les revêtements du dispositif consistent en un tissu de fibres de verre, ou de carbone ou d'aramide, ou d'une combinaison d'au moins deux de ces matériaux, le tissu étant imprégné d'un liant organique, du type phénolique ou époxy.

Le dispositif présente une masse surfacique qui dépend de sa destination en tant que pare-flamme ou coupe-feu. Avantageusement, il peut présenter une masse surfacique une masse surfacique d'au moins 1 kg/m², de préférence d'au plus 3 kg/m², et notamment combinée à une épaisseur d'au plus 4 mm. Cette configuration de masse surfacique permet de gagner en masse, par rapport aux systèmes existants en vue de résultats au moins équivalents de résistance au feu, ou d'accroître la sécurité incendie à masse égale.

Selon des variantes de réalisation, le dispositif peut comporter plusieurs structures superposées ou non, et éventuellement au moins un élément porteur agencé entre deux structures, l'ensemble étant de préférence rendu solidaire par pressage à chaud ou tout autre procédé équivalent de solidarisation.

L'élément porteur sera par exemple un panneau de bois, le dispositif pouvant servir dans des applications de bâtiment.

L'élément porteur pourra plutôt être constitué de feuilles d'aluminium agencées selon une configuration notamment en forme de nid d'abeille, le dispositif servant idéalement de paroi coupe-feu dans des avions. Un tel dispositif convient dans le domaine aéronautique ou ferroviaire car procurant un gain de masse significatif.

Le dispositif de l'invention est avantageusement intégré à des parois, ou à des éléments d'habillage d'isolation thermique, moulés ou non, ou sert de système mobile de protection.

Ce dispositif convient en tant que moyen pare-flamme ou coupe-feu dans des véhicules ferroviaires, d'aéronautique, maritimes, ou routiers, ou dans des habitations ou locaux commerciaux.

La présente invention est maintenant décrite à l'aide d'exemples uniquement illustratifs et nullement limitatifs de la portée de l'invention, et à partir des illustrations ci-jointes, dans lesquelles :
- La figure 1 représente une vue en coupe d'un dispositif d'isolation thermique de l'invention et pare-flamme ou coupe-feu;
- La figure 2 est une vue en coupe détaillée de l'âme du dispositif de l'invention ;
- La figure 3 est une variante de la figure 2 ;
- Les figures 4 à 6 sont des vues en coupe d'autres variantes de réalisation du dispositif.

Les figures ne sont pas à l'échelle pour en faciliter la lecture.

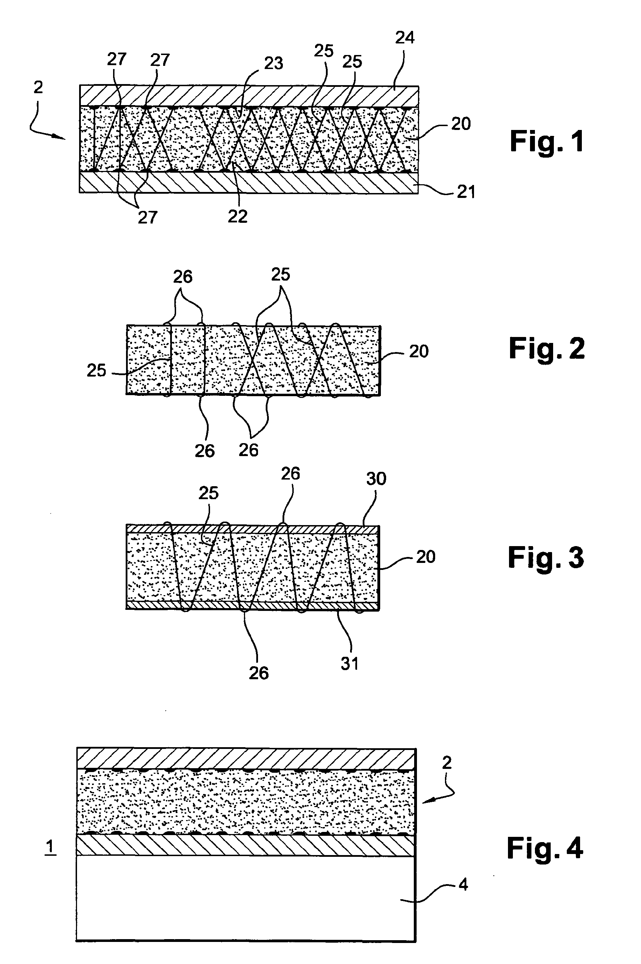

La figure 1 illustre, dans sa configuration la plus simple selon l'invention, un dispositif 1 d'isolation thermique assurant également la fonction d'un dispositif pare-flamme ou coupe-feu.

Le dispositif 1 comporte une structure isolante 2 résistante au feu comprenant en feuilleté, une âme 20 de matériau isolant minéral et deux revêtements 21 et 24, respectivement agencé de part et d'autre de l'âme.

La couche 20 en matériau isolant thermique présente selon ses plus grandes dimensions, deux faces opposées 22 et 23. Le revêtement 21 couvre l'une des faces 22 de la couche, tandis que le revêtement 24 couvre la face opposée 23, les revêtements étant solidarisés sur la totalité des faces et principalement au niveau de points de soudure 27.

La structure 2 est obtenue en superposant les revêtements 21 et 24, et l'âme 20, et en réalisant une étape de pressage à chaud dans le procédé de fabrication.

Sont décrits dans un premier temps les éléments constitutifs de la structure avant assemblage ou solidarisation complète, puis dans un second temps la structure telle qu'elle est destinée à être utilisée.

Ainsi, l'âme en matériau isolant thermique 20 est faite d'un matériau fibreux, à base de fibres minérales, telles que des fibres de silice, des fibres de verre, ou des fibres de céramique. La nature des fibres confèrent au dispositif une tenue en température distincte mais suffisamment élevée pour l'application, notamment de l'ordre de 700°C pour le verre, 1100°C pour la silice, 1400°C pour la céramique, ainsi qu'une résistance à la perforation de la flamme.

Les fibres minérales sont selon l'invention dépourvues de liant. L'âme présente néanmoins une très bonne tenue mécanique en raison d'un enchevêtrement important des fibres entre elles.

Avant assemblage, la couche 2 en matériau fibreux présente par exemple une épaisseur comprise entre 5 et 13 mm pour une masse surfacique comprise entre 0,7 et 2 kg/m² et une masse volumique de l'ordre de 100 à 150 kg/m³.

Selon l'invention et de manière illustrée sur la figure 2, l'âme 2 comporte une multiplicité d'éléments en fibres 25 traversant l'épaisseur de l'âme, de préférence sensiblement perpendiculairement aux faces 22 et 23, et/ou de manière oblique. Les éléments 25 sont dits traversants, car ils joignent chacune des faces 22 et 23 de la couche en y étant attachés en des points d'extrémité 26.

Un élément 25 se présente sous la forme d'un fil constitué d'une pluralité de filaments, ou sous la forme d'un unique filament. Les filaments sont à base de fibres minérales, de préférence des fibres de verre, notamment d'un diamètre compris entre 9 et 13 µm.

Ces éléments 25 résultent d'une couture par aiguilletage ou toute autre technique similaire.

La couture ou piqûre est continue ou non. Une couture discontinue s'entend par un élément ne traversant qu'une seule fois l'épaisseur de l'âme et connecté une seule fois à chacune des faces opposées de l'âme.

Une couture continue est par contre assurée lorsque les éléments sont constitués d'un ou de plusieurs fils, un fil s'étendant selon l'épaisseur de l'âme et sur tout ou partie de la surface de l'âme, en étant piqué à plusieurs reprises dans chacune des faces opposées de l'âme.

Les éléments 25 peuvent être ou non sécants entre eux.

La couture peut être effectuée à l'aide de deux supports de textile 30 et 31 (figure 3) disposés respectivement sur chacune des faces 22 et 23 de l'âme. Ces supports participent à la tenue mécanique de l'âme avec ses éléments traversants, et renforcent, une fois l'âme assemblée avec les revêtements 21 et 24, la cohésion mécanique de l'ensemble de la structure.

Les supports de textile 30 et 31 sont notamment des nappes tissées en fibres de verre, ou de silice, ou de basalte.

Les caractéristiques mécaniques de la structure 2 sont fonction de la nature et de l'épaisseur des revêtements 21 et 24. Selon la destination finale du dispositif pare-flamme ou coupe-feu, le module de rigidité de la structure pourra être imposée par les caractéristiques techniques des revêtements 21 et 24.

Les revêtements 21 et 24 sont des tissus de fibres imprégnés de liant organique. Le tissu est à base de fibres de verre, ou de fibres de carbone ou d'aramide, ou une combinaison d'au moins deux de celles-ci. Le liant organique est par exemple une résine phénolique ou une résine époxy, ou une combinaison des deux. Chacun des revêtements peut comprendre une nature de fibres distincte.

L'épaisseur des revêtements correspond sensiblement à celle obtenue après assemblage à l'âme de la structure. L'épaisseur est notamment comprise entre 0, 1 et 0,7 mm.

La solidarisation des revêtements 21, 24, à l'âme 2, est obtenue par pressage à chaud de l'ensemble, ou par tout autre procédé équivalent. Le pressage à chaud reste néanmoins un procédé privilégié car il est fiable, contrôlable, et reproductible industriellement.

Cette étape de pressage à chaud dans le procédé de fabrication de la structure 2 réalise une liaison des revêtements à l'âme en une multitude de points de soudure 27 qui correspondent aux points d'extrémité 26 des éléments traversants 25.

Cette étape est assurée par un autoclave ou une presse chauffante à une température comprise entre 130 et 180°C, et sous une pression comprise entre 4 et 10 bars. La température, la pression et le temps sont des paramètres qui seront adaptés au type de liant, à l'épaisseur initiale de l'âme avant compression, et à la configuration finale du dispositif, en particulier son épaisseur et les caractéristiques mécaniques recherchées.

La structure 2 peut constituer à part entière un dispositif d'isolation thermique 1. Elle peut servir de panneau structurant rigide ou de panneau semi-souple. Elle peut dessiner une enveloppe isolante d'habillage adaptée à être souple, ou rigide avec une forme définie par moulage.

Comme illustré sur la figure 4, le dispositif peut comprendre la structure isolante 2 de la figure 1, ainsi qu'un panneau de couverture 4 associé à l'une des faces de la structure. L'assemblage du panneau à la structure peut être fait lors de l'étape de pressage à chaud de la structure. En variante, elle peut être réalisée par collage à l'aide d'une colle résistant au feu du type époxy, silicone, polyuréthane, phénolique, ou par tout moyen mécanique du type vissage, clipsage, pincement.

Le dispositif peut renforcer par exemple une dalle de plafond dont le panneau de couverture 4 est destiné à être en regard de la pièce. La structure 2 assure au dispositif sa fonction de pare-flamme et permet en outre, lorsque les revêtements 21 et 24 sont suffisamment rigides, de rigidifier la dalle.

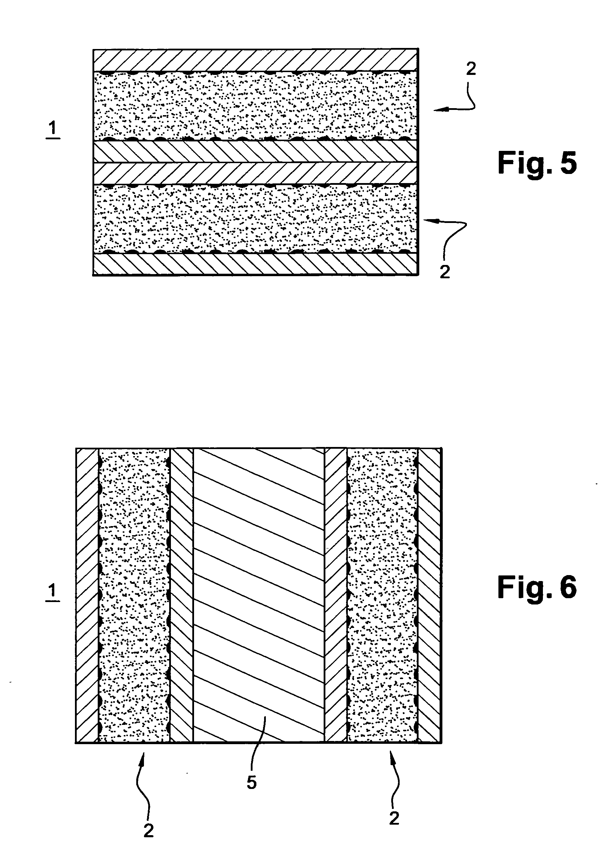

Le dispositif peut être conçu dans d'autres variantes de réalisation par l'agencement d'une superposition de structures isolantes 2 (figure 5), séparées ou non par des éléments porteurs 5 (figure 6). Un élément porteur 5 est par exemple une structure d'aluminium en nid d'abeille, ou un panneau en bois, ou tout autre support.

Le dispositif illustré sur la figure 6 est avantageusement obtenu par pressage à chaud de l'ensemble en une seule opération.

Pour montrer l'intérêt de l'invention, des tests de résistance au feu ont été réalisés pour deux exemples de dispositifs selon l'invention.

Les échantillons de dispositifs selon l'invention ont subi des tests bien au-delà des minima requis par les normes FAR25 de la FAA (l'Administration fédérale de l'Aviation Américaine) et ISO, telles que les normes, ISO 2685, EN-ISO-11925-2, NF 16001, EN 13663. A titre d'exemple, les quinze minutes requises suivant la norme FAR25 ont été prolongées et vérifiées à 60 minutes à 1100°C pour une application de bouclier pare-feu de 2,9 kg/m² et 3 mm d'épaisseur telle que l'exemple 1 formulé ci-après.

L'exemple 1 est une structure 2 conformément à celle illustrée sur la figure 1. L'âme fibreuse 2 est en fibres de verre avec des éléments traversants 25 à partir de fil en fibres de verre et présente après l'étape de solidarisation une épaisseur de 3 mm. Les revêtements 21 et 23 sont en fibres de carbone combinées à un liant phénolique, et présentent chacun une masse surfacique de 0,6 kg/m². Le dispositif présente une masse surfacique de 2,9 kg/m².

Ce dispositif qui ne dépasse pas 3 kg/m², présentant donc des caractéristiques de masse très intéressantes, résiste plus d'une heure à une température de 1100 °C, en regard de la flamme. Ce dispositif respecte les normes actuelles et démontre qu'en allant au-delà des minima imposés par les normes, il rend possible un accroissement de la sécurité et/ou permet d'assurer une diminution de masse par rapport aux dispositifs actuels.

L'exemple 2 correspond au dispositif de la figure 6. Chaque structure 2 présente une masse surfacique de 3 kg/m², est en obtenu à partir d'une âme en fibres de verre, et de revêtements en fibres de verre. L'élément porteur 5 présente une épaisseur de 17 mm et est en nid d'abeille d'aluminium. L'ensemble forme un dispositif d'épaisseur totale de 23 mm pour une masse surfacique de 8 kg/m².

Ce dispositif de l'exemple 2 satisfait le test du feu de la norme EN1363-1 1999, en étant exposé une demi-heure à 842°C sur la face en regard de la flamme, tout en présentant une température en face arrière opposée maximum de 130°C. Ce dispositif est également conforme aux normes NF16101, EN45545, et UNI CEI 11170.

Ainsi, l'invention propose un dispositif remarquable qui en présence de feu, engendre une désolidarisation mécanique superficielle de ses éléments constitutifs, mais n'attaque nullement sa cohésion thermique. La solution de l'invention procure un dispositif apte à résister à la propagation d'une flamme pendant un temps satisfaisant au regard de futures exigences plus draconiennes que les normes actuelles.

## Revendications

1. Dispositif d'isolation thermique, en particulier dispositif coupe-feu, comportant une structure feuilletée résistante au feu (2) comprenant une âme (20) de matériau fibreux isolant présentant deux faces opposées (22, 23), et deux revêtements (21, 24) solidaires respectivement de chacune des faces (22, 23) de l'âme, **caractérisé en ce que** l'âme (2) de matériau isolant comprend des éléments traversants (25) à base de fibres minérales, sillonnant l'épaisseur de l'âme et joignant les deux faces opposées de l'âme en des points d'extrémité (26), et **en ce que** les revêtements (21, 24) sont formés d'un tissu fibreux imprégné de liant organique, la liaison mécanique de l'âme de matériau isolant avec chaque revêtement étant réalisée sur l'ensemble des faces de l'âme, par des points de soudure (27) coïncidant avec les points d'extrémité (26) des éléments traversants en fibres.

2. Dispositif selon la revendication 1, **caractérisé en ce que** l'âme (2) et les revêtements (21, 24), sont rendus solidaires par pressage à chaud.

3. Dispositif selon la revendication 1 ou 2, **caractérisé en ce que** l'âme de matériau isolant (20) comporte des fibres à base de silice, ou de verre, ou de céramique, ou d'une combinaison d'au moins deux de ces matériaux, les fibres étant dépourvues de liant.

4. Dispositif selon l'une quelconque des revendications précédentes, **caractérisé en ce que** les éléments traversants (25) sont agencés perpendiculairement ou de manière oblique par rapport aux faces (22, 23) de l'âme, et sont éventuellement sécants entre eux.

5. Dispositif selon l'une quelconque des revendications précédentes, **caractérisé en ce que** les éléments traversants (24) sont formés de fils ou filaments discontinus ou continus à base de fibres, de préférence de fibres de verre, et rendus solidaires des faces opposées de l'âme par une technique de couture ou similaire, les faces opposées de l'âme pouvant respectivement comprendre un support de textile (30, 31) à base de fibres minérales et perforé par les éléments traversants.

6. Dispositif selon l'une quelconque des revendications précédentes, **caractérisé en ce que** les revêtements (21, 24) consistent en un tissu de fibres de verre, ou de carbone ou d'aramide, ou d'une combinaison d'au moins deux de ces matériaux, le tissu étant imprégné d'un liant organique, du type phénolique ou époxy.

7. Dispositif selon l'une quelconque des revendications précédentes, **caractérisé en ce qu'**il présente une masse surfacique d'au moins 1 kg/m², de préférence d'au plus 3 kg/m², et notamment combinée à une épaisseur d'au plus 4mm.

8. Dispositif selon l'une quelconque des revendications précédentes, **caractérisé en ce qu'**il comporte plusieurs structures (2) superposées ou non, et éventuellement au moins un élément porteur (5) agencé entre deux structures, l'ensemble étant de préférence rendu solidaire par pressage à chaud.

9. Dispositif selon l'une quelconque des revendications précédentes, **caractérisé en ce qu'**il est intégré à des parois, ou à des éléments d'habillage d'isolation thermique, moulés ou non, ou sert de système mobile de protection.

10. Dispositif selon l'une quelconque des revendications précédentes, **caractérisé en ce qu'**il est utilisé en tant que pare-flamme ou coupe-feu dans des véhicules ferroviaires, d'aéronautique, maritimes, ou routiers, ou dans des habitations ou locaux commerciaux.

11. Véhicule ferroviaire, **caractérisé en ce qu'**il comporte un dispositif d'isolation thermique selon l'une quelconque des revendications 1 à 10.

12. Véhicule aéronautique, **caractérisé en ce qu'**il comporte un dispositif d'isolation thermique selon l'une quelconque des revendications 1 à 10.

13. Véhicule maritime, **caractérisé en ce qu'**il comporte un dispositif d'isolation thermique selon l'une quelconque des revendications 1 à 10.

14. Véhicule routier, **caractérisé en ce qu'**il comporte un dispositif d'isolation thermique selon l'une quelconque des revendications 1 à 10.

15. Local, pour habitation ou local commercial, **caractérisé en ce qu'**il comporte un dispositif d'isolation thermique selon l'une quelconque des revendications 1 à 10.

## Claims

1. A heat-insulation device, in particular a firebreak device, including a fire-resistant laminated structure (2) comprising a core (20) of insulating fibrous material having two opposite faces (22, 23), and two coatings (21, 24) interdependent on each of the faces (22, 23) of the core respectively, **characterized in that** the insulating material core (2) comprises cross-elements (25) based on fibrous materials, criss-crossing the thickness of the core and joining both opposite faces of the core in end points (26), and **in that** the coatings (21, 24) are formed with a fibrous fabric impregnated with an organic binder, the mechanical connection of the insulating material core with each coating being achieved on the whole of the faces of the core, through weld points (27) coinciding with the end points (26) of the fibre cross-elements.

2. The device according to claim 1, **characterized in that** the core (2) and the coatings (21, 24) are made interdependent by hot pressing.

3. The device according to claim 1 or 2, **characterized in that** the insulating material core (20) includes fibers based on silica, or on glass, or on ceramic, or on a combination of at least two of these materials, the fibers being without any binder.

4. The device according to any of the preceding claims, **characterized in that** the cross-elements (25) are laid out perpendicularly or obliquely relatively to the faces (22, 23) of the core, and possibly intersect each other.

5. The device according to any of the preceding claims, **characterized in that** the cross-elements (25) are formed with discontinuous or continuous yarns or filaments based on fibers, preferably on glass fibers, and made interdependent on the opposite faces of the core by a sewing or similar technique, the opposite faces of the core may respectively comprise a fabric support (30, 31) based on mineral fibers and perforated by the cross-elements.

6. The device according to any of the preceding claims, **characterized in that** the coatings (21, 24) consists in a fabric of glass or carbon or aramide fibers, or of a combination of at least two of these materials, the fabric being impregnated with an organic binder, of the phenol or epoxy type.

7. The device according to any of the preceding claims, **characterized in that** it has a surface mass of at least 1 kg/m², preferably at most 3 kg/m², and notably combined with a thickness of at most 4 mm.

8. The device according to any of the preceding claims, **characterized in that** it includes several structures (2) either superposed or not, and optionally at least one bearing element (5) laid out between two structures, the whole being preferably made interdependent by hot pressing.

9. The device according to any of the preceding claims, **characterized in that** it is integrated to walls, or to heat insulation cladding elements, either molded or not, or is used as a movable protection system.

10. The device according to any of the preceding claims, **characterized in that** it is used as a flame screen or firebreak in railway, aeronautical, maritime, or road vehicles, or in dwellings or commercial premises.

11. A railway vehicle, **characterized in that** it includes a heat insulation device according to any of claims 1 to 10.

12. An aeronautical vehicle, **characterized in that** it includes a heat insulation device according to any of claims 1 to 10.

13. A maritime vehicle, **characterized in that** it includes a heat insulation device according to any of claims 1 to 10.

14. A road vehicle, **characterized in that** it includes a heat insulation device according to any of claims 1 to 10.

15. Premises, for a dwelling or commercial premises, **characterized in that** it includes a heat insulation device according to any of claims 1 to 10.

## Patentansprüche

1. Vorrichtung zur Wärmeisolierung, insbesondere Feuerfestigkeitsvorrichtung, die eine feuerfeste Verbundstruktur (2) aufweist, die einen Kern (20) aus isolierenden Fasermaterialien, der zwei gegenüberliegende Seiten (22, 23) aufweist und zwei Überzüge (21, 24), die jeweils mit jeder der Seiten (22, 23) des Kerns verbunden sind, umfasst, **dadurch gekennzeichnet, dass** der Kern (2) aus isolierendem Material durchgehende Elemente (25) auf der Basis von Mineralfasern umfasst, die kreuz und quer durch die Dicke des Kerns laufen und die zwei gegenüberliegenden Seiten des Kerns an Endpunkten (26) verbinden, und dass die Überzüge (21, 24) von einem mit organischem Bindemittel imprägnierten Fasergewebe gebildet werden, wobei die mechanische Verbindung des Kerns aus isolierendem Material mit jedem Überzug auf der Gesamtheit der Seiten des Kerns durch Schweißpunkte (27) durchgeführt wird, die mit den Endpunkten (26) der durchgehende Faserelemente zusammenfallen.

2. Vorrichtung nach Anspruch 1, **dadurch gekennzeichnet, dass** der Kern (2) und die Überzüge (21, 24) durch Warmpressen verbunden werden.

3. Vorrichtung nach Anspruch 1 oder 2, **dadurch gekennzeichnet, dass** der Kern aus isolierendem Material (20) Fasern auf der Basis von Silika oder von Glas oder von Keramik oder einer Kombination von mindestens zwei dieser Materialien aufweist, wobei die Fasern kein Bindemittel enthalten.

4. Vorrichtung nach einem der vorangehenden Ansprüche, **dadurch gekennzeichnet, dass** die durchgehenden Elemente (25) im Verhältnis zu den Flächen (22, 23) des Kerns senkrecht oder schräg angeordnet sind und sich eventuell überschneiden.

5. Vorrichtung nach einem der vorangehenden Ansprüche, **dadurch gekennzeichnet, dass** die durchgehenden Elemente (24) von diskontinuierlichen oder kontinuierlichen Fasern oder Filamenten auf der Basis von Fasern, vorzugsweise von Glasfasern, gebildet sind und mit den gegenüberliegenden Seiten des Kerns anhand einer Nähtechnik oder ähnlichem verbunden sind, wobei die gegenüberliegenden Seiten des Kerns jeweils eine von den durchgehenden Elementen perforierte textile Unterlage (30, 31) auf der Basis von Mineralfasern umfassen können.

6. Vorrichtung nach einem der vorangehenden Ansprüche, **dadurch gekennzeichnet, dass** die Überzüge (21, 24) aus einem Glas-, Karbon- oder Aramidfasergewebe oder einer Kombination von mindestens zwei dieser Materialien bestehen, wobei das Gewebe mit einem organischen Bindemittel vom Typ Phenol oder Expoxy imprägniert ist.

7. Vorrichtung nach einem der vorangehenden Ansprüche, **dadurch gekennzeichnet, dass** sie eine flächenbezogene Masse von mindestens 1 kg/m², vorzugsweise von höchstens 3 kg/m², aufweist, und vor allem kombiniert mit einer Dicke von höchstens 4 mm.

8. Vorrichtung nach einem der vorangehenden Ansprüche, **dadurch gekennzeichnet, dass** sie mehrere übereinanderliegende oder nicht übereinanderliegende Strukturen (2) aufweist und eventuell mindestens ein zwischen zwei Strukturen ausgebildetes tragendes Element (5), wobei das Ganze vorzugsweise durch Warmpressen verbunden wird.

9. Vorrichtung nach einem der vorangehenden Ansprüche, **dadurch gekennzeichnet, dass** sie in Wände oder wärmeisolierende Verkleidungselemente integriert ist, die geformt oder nicht geformt wurden, oder als mobiles Schutzsystem dient.

10. Vorrichtung nach einem der vorangehenden Ansprüche, **dadurch gekennzeichnet, dass** sie in Schienen-, Luft-, See- oder Straßenfahrzeugen oder Wohnungen oder Geschäftsräumen als Flammen- oder Feuerschutz verwendet wird.

11. Schienenfahrzeug, **dadurch gekennzeichnet, dass** es eine wärmeisolierende Vorrichtung nach einem der Ansprüche 1 bis 10 aufweist.

12. Luftfahrzeug, **dadurch gekennzeichnet, dass** es eine wärmeisolierende Vorrichtung nach einem der Ansprüche 1 bis 10 aufweist.

13. Seefahrzeug, **dadurch gekennzeichnet, dass** es eine wärmeisolierende Vorrichtung nach einem der Ansprüche 1 bis 10 aufweist.

14. Straßenfahrzeug, **dadurch gekennzeichnet, dass** es eine wärmeisolierende Vorrichtung nach einem der Ansprüche 1 bis 10 aufweist.

15. Wohn- oder Geschäftsraum, **dadurch gekennzeichnet, dass** er eine wärmeisolierende Vorrichtung nach einem der Ansprüche 1 bis 10 aufweist.
